**Europäisches Patentamt**

**European Patent Office**

**Office européen des brevets**

(19)

(11) Veröffentlichungsnummer: **0 088 788**
**B1**

(12) # EUROPÄISCHE PATENTSCHRIFT

(45) Veröffentlichungstag der Patentschrift:
**19.06.85**

(51) Int. Cl.⁴: **G 03 B  35/10**, G 03 B  35/22

(21) Anmeldenummer: **82902899.2**

(22) Anmeldetag: **22.09.82**

(86) Internationale Anmeldenummer:
**PCT/DE  82/00187**

(87) Internationale Veröffentlichungsnummer:
**WO  83/01125  (31.03.83** Gazette 83/8)

(54) **STEREO-SYSTEM.**

(30) Priorität: **22.09.81  DE 3138213**

(43) Veröffentlichungstag der Anmeldung:
**21.09.83 Patentblatt 83/38**

(45) Bekanntmachung des Hinweises auf die Patenterteilung:
**19.06.85 Patentblatt 85/25**

(84) Benannte Vertragsstaaten:
**AT BE CH FR GB LI NL SE**

(56) Entgegenhaltungen:
**BE - A - 888 732**
**FR - A - 755 448**
**FR - A - 1 269 288**
**GB - A - 763 966**
**US - A - 4 175 829**
**US - A - 4 183 633**

(73) Patentinhaber: **Schulte, Gerd,**
**Martin-Luther-Strasse 32-38, D-1000 Berlin 28 (DE)**

(72) Erfinder: **Schulte, Gerd, Martin-Luther-Strasse 32-38,**
**D-1000 Berlin 28 (DE)**

(74) Vertreter: **Strohschänk, Heinz, Dipl.-Ing.,**
**Musäusstrasse 5, D-8000 München 60 (DE)**

## Beschreibung

Die Erfindung betrifft ein Stereo-System mit aneinander angrenzenden, gegenläufig gedrehten Breitformat-Halbbildern und mit einem an die Halbbilder angrenzenden Steg.

Stereo-Systeme mit umlenkenden Spiegeln oder Prismen, welche übereinander angeordnete Breitformat-Halbbilder erzeugen, sind vor allem in der 3D-Filmtechnik bereits mit großem Aufwand verwirklicht und vervollkommnet worden.

Dagegen können einfache Spiegel- oder Spiegel-Prismenvorsätze (Elmo, Tridelta), die in Verbindung mit mono-objektiven Kameras gegenläufig gedrehte Querformat-Halbbilder ergeben (DE-AS 1 126 234), wohl nur als Notbehelf angesehen werden, da Handlichkeit, Präzision und Lichtstärke gleichermaßen zu wünschen übrig lassen. Da sich hier alle Toleranzen bei der Aufnahme, Rahmung und Wiedergabe addieren und sich wegen der gegenläufigen Anordnung sogar doppelt auswirken, beeinträchtigen Höhenfehler und Konvergenzverschiebungen den Stereo-Bildgenuß bei der Projektion von Bildserien in starkem Maße.

In der Kinotechnik hat das unter dem Namen »Zeiss Ikon« bekanntgewordene Einbandverfahren interessanterweise im Laufe seiner Entwicklung von zwei verchiedenen Querformat-Bildanordnungen Gebrauch gemacht (O. Vierling: »Die Stereoskopie in der Photographie und Kinematographie«, Wissenschaftliche Verlagsgesellschaft, Stuttgart 1965, Seiten 189—199).

Die zunächst angewandte gegenläufige Bilddrehung wurde wieder aufgegeben, offenbar u. a. aufgrund einiger der oben angedeuteten nachteiligen Eigenschaften, zugunsten einer gleichsinnigen Ausrichtung der Halbbilder. Dieses Verfahren vermeidet zwar die genannten Nachteile, ist aber sehr aufwendig, wenn eine Veränderung der Aufnahme-Parameter, wie z. B. der Basis, gefordert wird (DE-PS 939 305) und ist überdies für kurze Brennweiten nicht geeignet.

Ähnliches gilt auch für die DE-OS 3 017 820. Dort wird u. a. eine Übereinander-Anordnung von Breitformat-Halbbildern, die zusammen mit dem Trennsteg eine quadratische Fläche einnehmen, vorgeschlagen; des weiteren auch die Ankoppelung von Objektiven mit größerer Basis und Brennweite und ferner noch ein mit der Scharfeinstellung automatisch verbundener Konvergenzausgleich.

Allerdings ist die dort ausgeführte Objektivankoppelung mit gleichsinniger Halbbildausrichtung für Normalbasis und -brennweite nicht anwendbar. Ebenso ist die genannte Bedingung für einen vollen Konvergenzausgleich offenbar nur schwer zu erfüllen.

Es ergibt sich die Erkenntnis, daß ein neu einzuführendes Stereo-System nur dann Erfolg haben wird, wenn es von vornherein stereoskopische Bildfehler vermeidet und außerdem in bezug auf Handhabung und Vielseitigkeit bei gleichzeitig vertretbarem Aufwand mit den Apparaten der Flachbildtechnik konkurrieren kann.

Der Erfindung liegt demzufolge die Aufgabe zugrunde, ein solches System aufzuzeigen.

Erfindungsgemäß wird die Aufgabe dadurch gelöst, daß auf dem Trennsteg oder dem Randsteg Referenzmarken vorgesehen sind, welche bei der Wiedergabe optoelektronisch abgetastet werden und über eine Brückenregelschaltung und Stellmotoren die Kompensierung störender Höhenfehler und/oder Konvergenzfehler bewirken.

Die Stereo-System-Kamera ermöglicht nicht nur die Aufzeichnung verschiedenster Daten ohne Störung des Bildinhaltes, sondern sorgt auch durch das Aufbringen von Referenzmarken und kodierter Daten später für eine einwandfreie Wiedergabe, vor allem bei der Projektion.

Der Stereo-System-Projektor regelt schließlich Höhenfehler bzw. Konvergenzabweichungen automatisch aus und kann durch den senkrechten Stapelschacht besonders einfach und kompakt aufgebaut sein.

Ein besonderer Vorteil der Erfindung liegt in der nun erst möglichen, sehr einfachen und flachen Kamerakonstruktion, einschließlich integrierter Wechselobjekte, was nur durch die Verwendung gegenläufig bilddrehender Elemente erreichbar erscheint, wozu allerdings die wirksame Kompensierung aller störenden stereoskopischen Bildfehler die unabdingbare Voraussetzung ist.

Durch die gewählte Bildanordnung wird dabei auch eine maximale Projektions-Lichtausbeute erzielt und dank der gegenläufigen Bilddrehung ebenfalls eine absolut gleiche Ausleuchtung für beide Halbbilder. Doch praktikabel wird diese Art der Bildanordnung erst durch die Referenzmarken, welche bei der Projektion eine automatische Ausregelung der stereoskopischen Bildfehler gewährleisten.

Daraus ergibt sich als weiterer Vorteil der zusätzliche Komfort der Fernbedienungsmöglichkeit der wichtigsten stereoskopischen Parameter. Auch hier führt die Verwendung gegenläufig bilddrehender Elemente wieder zu einer besonders kompakten Projektorkonstruktion, analog der der Kamera.

Stereo-System-Kamera und Stereo-System-Projektor erscheinen dabei lediglich als unterschiedliche Ausbildungsformen ein und desselben Grundprinzips.

Der Erfindungsgedanke wird beispielsweise in der Zeichnung näher erläutert.

Fig. 1 zeigt in perspektivischer Darstellung die grundsätzliche Anordnung, die prinzipiell in gleicher Weise sowohl bei der Stereo-System-Kamera als auch beim Stereo-System-Projektor Anwendung findet. Der besseren Übersichtlichkeit wegen wurden die in ihrer Dimensionierung vom Strahlenverlauf abhängigen spiegelnden Flächen als einheitlich breite Prismen dargestellt.

Fig. 2 und 3 zeigen schematisch zwei Varianten von erfindungsgemäß hergestellten Stereo-System-Dias.

Dabei bezeichnet 1 das linke Halbbild, 2 das rechte Halbbild, 3 den Trennsteg bzw. 3' den Randsteg (mit Filmnummer, Bildnummer, Zeit, Datum und Ortsbezeichnung) und 4 die Referenzmarke, die auch durch scharfe Bildbegrenzungen der Halbbilder selbst erzeugt sein kann. Allerdings setzt dies einen gewissen Helligkeitskontrast zum Trennsteg voraus. 5 bezeichnet bei der Kamera die schematisch dargestellte Referenzblende bzw. die lichtempfindlichen Meßzellen beim Projektor.

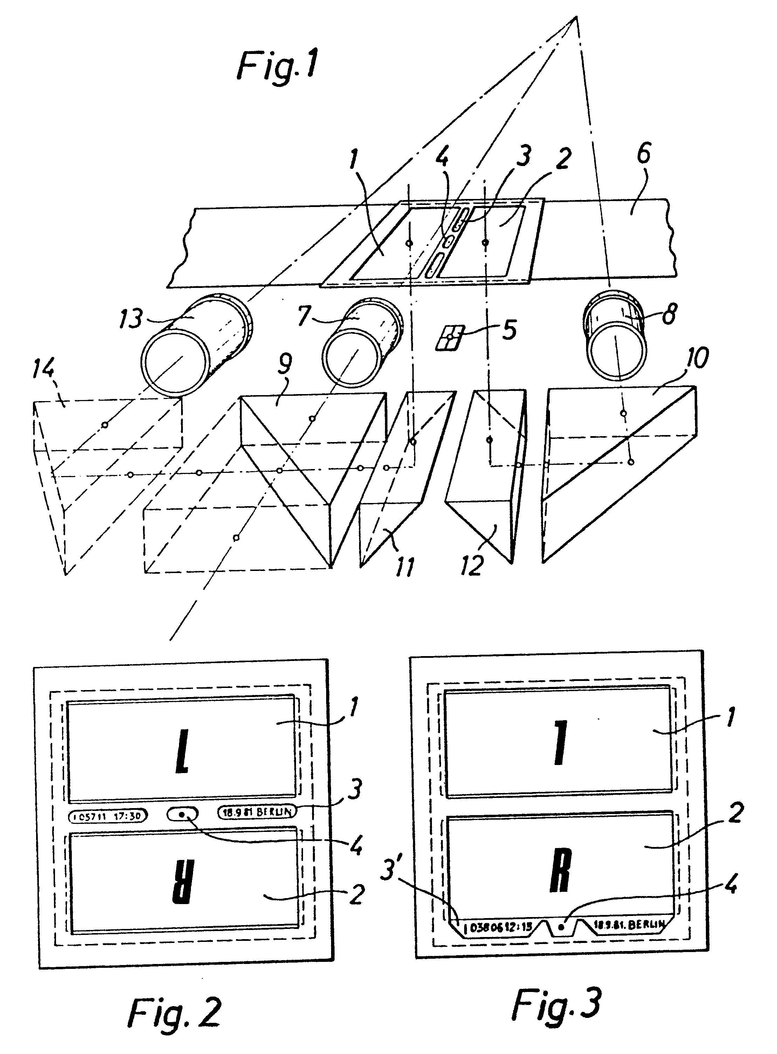

In der Fig. 1 bezeichnet 6 den Film oder dergleichen Bildträger; 7, 8 die Objektive; 9, 10 und 11, 12 die umlenkenden Spiegel oder Prismen. 13 ist ein weiteres mögliches längerbrennweitiges Aufnahmeobjektiv mit zugehörigem Spiegel oder Prisma 14.

Die Variante nach Fig. 3 mit am Rande liegender Datenaufzeichnung und erweiterter Kodiermöglichkeit auf dem Mittelsteg bzw. vorteilhaft vergrößerter Bildhöhe ist für Stereo-System-Kameras (und Projektoren) mit gegenüber der Fig. 1 auf dem Kopf stehender Anordnung und demzufolge Kopf-zu-Kopf-Ausrichtung der Halbbilder gedacht. Bei Schrägprojektion von oben — ohne Spezialkondensator — wird hierbei trapezförmige Verzeichnung vermieden. Eine weitere Vertauschung der Halbbildzuordnung kann auch durch die Einführung einer jeweils gleichsinnig umlenkenden dritten Spiegelfläche vor den Objektiven 7 und 8 bewirkt werden.

Wie bereits ausgeführt, hat sich bislang die Verwendung der gegenläufigen Bilddrehung sowohl in der Fotografie als auch in der Kinematografie als nicht praktikabel erwiesen, da sich unvermeidliche Toleranzen hier besonders ungünstig auswirken und keine einwandfreie Stereoprojektion zulassen.

Die erfindungsgemäß auf dem Trennsteg 3 oder Randsteg 3' des Films 6 angeordneten Referenzmarken 4 verhindern Höhenfehler auf folgende Weise: Bei der Projektion wird durch das Kondensorlicht — nötigenfalls über einen Zusatzspiegel und eine Zusatzoptik — ein scharfes Bild der Referenzmarke 4 auf die hinter dem Dia befindlichen Meßzellen 5 entworfen. Da diese Meßzellen parallel zum Trennsteg 3 (oder Randsteg 3') gleichfalls aneinander angrenzen, ergeben sich bei einer Höhenverschiebung des Dias unterschiedliche Meßwerte. Diese werden einer elektronischen Brücken-Regelschaltung zugeführt, die wiederum eine Steuerspannung an einen Stellmotor abgibt, der schließlich durch eine entgegengesetzte Verschiebung des Dias den Höhenfehler ausregelt. In gleicher Weise erfolgt auch die Ausregelung von Konvergenzfehlern mit einer um 90° in der Ebene gedrehten Meßzellen-Anordnung.

Die Referenzmarken können dabei z. B. als Strich-, Kreuz- oder Punktmarken ausgebildet sein. Wenn sie auf der senkrecht zum Trennsteg 3 verlaufenden Mittelachse oder symmetrisch zu dieser angeordnet werden, sind die Dias in bezug auf die besonders kritischen Höhenfehler weitgehend unempfindlich gegen Verkantungen.

Diese Anordnung ist übrigens auch auf den 3D-Kinofilm, der ja bekanntlich weitgehend die gleichsinnige Übereinanderanordnung der Halbbilder verwendet, übertragbar. Mit Hilfe der Referenzmarken ist ein fehlerfreies optisches Umkopieren ohne weiteres möglich.

Damit bei der späteren Wiedergabe der Stereo-Bilder, insbesondere bei der Projektion, die automatische Kompensierung von Höhenfehlern bzw. von Konvergenzabweichungen überhaupt erst möglich wird, sind in der Stereo-System-Kamera geeignete Vorrichtungen vorgesehen, um auf dem Trennsteg 3 des Films 6 zwischen den beiden Halbbildern 1 und 2 bzw. auf dem Randsteg 3' Referenzmarken 4 aufzubringen. Geeignet hierfür sind entweder eine scharf begrenzte Lichtquelle, ein passives Lichtleitsystem mit entsprechender Blende 5 oder auch mechanisch bzw. chemisch wirkende Vorrichtungen.

In an sich bekannter Weise können durch zusätzliche Vorrichtungen auf dem Trennsteg 3 (Fig. 2) bzw. auf dem Randsteg 3' (Fig. 3) Datum, Uhrzeit, Namen, Bildnummer, Filmnummer, Kameranummer, Ortsbezeichnung und kodierte Kennzeichen für die Filmbearbeitung oder Wiedergabe oder beliebige Kombinationen der Einzelmerkmale der genannten Art gleichzeitig mit der Aufnahme oder Halbbildaufnahme (automatisch) aufgezeichnet werden.

Der Vorteil gegenüber zahlreichen anderen bekannten Einrichtungen dieser Art (DE-PS 453 011, DE-AS 27 480, DE-OS 2 501 620) liegt darin, daß einerseits der Bildinhalt nicht beeinträchtigt wird, daß das Bildformat nicht verändert wird und daß bei der Projektion gemäß Fig. 1 der Strahlengang ohnehin so geführt wird, daß sowohl eine Datenausblendung, eine seitliche Datenablesung als auch eine Datenprojektion unter das Stereobild wahlweise ohne nennenswerten Aufwand möglich ist.

Zudem dient der Trennsteg noch neben der Halbbild-Entkopplung der Ausbildung glasloser Diarahmen mit einem bildstützenden Mittelsteg.

Erst die erfindungsgemäße Beseitigung aller stereoskopisch störenden Bildfehler ermöglicht schließlich die Nutzung der optisch vorteilhaften, gegenläufig drehenden Anordnung zur Konstruktion hochwertiger Stereo-System-Kameras nach Fig. 1. Dabei wirkt das auch mit Wechselobjektiven extrem flache Kameragehäuse für die tiefliegenden Objektive als ideale Sonnenblende.

Im Gegensatz zu allen anderen kann bei diesem System definitionsgemäß ein automatischer Konvergenzausgleich schon dadurch herbeigeführt werden, daß die Referenzmarke auf dem Tennsteg oder Randsteg relativ verschoben bzw. verändert wird. In Relation zur Einstellentfernung ist neben der stufenlosen Verschiebung auch eine stufenweise Umschaltung möglich.

Das Stereo-System wird komplettiert durch den entsprechenden System-Projektor (Fig. 1), bei dem in Verlängerung des Kondensor-Strahlenganges durch die Referenzmarke 4 hinter dem zu projizierenden Diapositiv mindestens zwei lichtempfindliche Meßzellen 5 mit parallel zum Trennsteg 3 laufendem Spalt derart angeordnet sind, daß sie über eine Brücken-Regelschaltung und einen Stellmotor das Dia parallel zur Filmebene so steuern, daß dieses zentriert und ein etwaiger Höhenfehler automatisch kompensiert wird.

Wahlweise mittels zweier zusätzlicher Meßzellen, d. h., symmetrischer Aufteilung der beiden vorgenannten Zellen 5 durch einen zweiten Spalt senkrecht zum Trennsteg 3 und einer auf die zweite Achse entsprechend erweiterten Brücken-Regelschaltung samt zusätzlichem Stellmotor wird eine Korrektur auch für die Konvergenzeinstellung möglich. Dabei werden gegebenenfalls noch kodierte Daten auf dem Dia mitverarbeitet.

Erstmals können Höhen- und Konvergenzeinstellung auch noch über die Fernbedienung korrigiert werden, was bislang noch bei keinem anderen System möglich war. O. Vierling (s. o.) hierzu (Seite 91): »Die Verhältnisse bei der Stereo-Projektion sind ohnehin unabänderbar.« Das gilt nun nicht mehr.

Ein gemäß Fig. 1 aufgebauter, besonders kompakter Stereo-System-Projektor vermeidet außerdem die Pupillenteilung und damit Lichtverlust. Im Gegensatz zu gleichsinnig über einander angeordneten Halbbildern ist hier bei den gegenläufig gedrehten ohne weiteren Aufwand eine absolut gleiche Ausleuchtung und Verzerrungsfreiheit für beide Halbbilder erreichbar.

Wichtig ist, daß auch Daten unter das Stereobild (Standard-Bildwandgröße 1,4 m × 3 m) mitprojiziert oder einfach ausgeblendet bzw. seitlich am Projektor abgelesen werden können.

## Patentansprüche

1. Stereo-System mit aneinander angrenzenden, gegenläufig gedrehten Breitformat-Halbbildern und mit einem an die Halbbilder angrenzenden Steg, dadurch gekennzeichnet, daß auf dem Trennsteg (3) oder dem Randsteg (3') Referenzmarken (4) vorgesehen sind, welche bei der Wiedergabe optoelektronisch abgetastet werden und über eine Brücken-Regelschaltung und Stellmotoren die Kompensierung störender Höhenfehler und/oder Konvergenzfehler bewirken.

2. Stereo-System nach Anspruch 1, dadurch gekennzeichnet, daß die Referenzmarken (4) in der Mitte oder symmetrisch zur Mitte des Trennsteges (3) zwischen den Halbbildern (1, 2) oder eines parallel dazu verlaufenden Randsteges (3') angeordnet sind.

3. Stereo-System nach Anspruch 1 oder 2, dadurch gekennzeichnet, daß zum Aufbringen der Referenzmarken (4) auf den Film (6) eine scharf begrenzte Lichtquelle oder ein passives Lichtleitsystem mit entsprechender Begrenzungsblende (5) oder Vorrichtungen mechanischer oder chemischer Art vorgesehen sind und daß zusätzlich in an sich bekannter Weise Vorrichtungen vorgesehen sind, durch die gleichzeitig mit der Aufnahme oder Halbbildaufnahme auf dem Trennsteg (3) oder dem Randsteg (3') Datum, Uhrzeit, Namen, Bildnummer, Filmnummer, Kameranummer, Ortsbezeichnungen und kodierte Kennzeichen für die Filmbearbeitung oder -wiedergabe oder beliebige Kombinationen der Einzeldaten aufgezeichnet werden können.

4. Stereo-System nach einem der vorhergehenden Ansprüche, dadurch gekennzeichnet, daß zum Zwecke eines automatischen Konvergenzausgleichs die Referenzmarkiervorrichtung auf dem Trennsteg (3) oder Randsteg (3') verschiebbar angeordnet ist.

5. Stereo-System nach Anspruch 1 bis 3 (Fig. 1), dadurch gekennzeichnet, daß hinter dem zu projizierenden Diapositiv mindestens zwei lichtempfindliche Meßzellen (5) mit parallel zum Trennsteg laufendem Spalt derart angeordnet sind, daß sie über eine Brücken-Regelschaltung und einen Stellmotor das Dia parallel zur Filmebene so steuern, daß dieses zentriert und ein etwaiger Höhenfehler automatisch kompensiert wird.

6. Stereo-System nach Anspruch 5, dadurch gekennzeichnet, daß zwei zusätzliche Meßzellen, die durch symmetrische Aufteilung der beiden vorgenannten Zellen (5) durch einen zweiten Spalt senkrecht zum Trennsteg (3) erhalten werden und eine auf die zweite Achse entsprechend erweiterte Brücken-Regelschaltung samt zusätzlichem Stellmotor für die Konvergenzeinstellung vorgesehen sind.

## Claims

1. A stereo system with mutually adjoining wide-format half-images which are turned in opposite directions, and a bar portion adjoining the half-images, characterised in that provided on the separating bar portion (3) or the edge bar portion (3') are reference marks (4) which, during reproduction, are optoelectronically scanned and, by way of bridge control circuit and adjusting motors, provide for compensation of troublesome level and/or convergence defects.

2. A stereo system according to claim 1, characterised in that the reference marks (4) are disposed in the centre or symmetrically with respect to the centre of the separating bar portion (3) between the half-images (1, 2) or an edge bar portion (3') which extends parallel thereto.

3. A stereo system according to claim 1 or claim 2, characterised in that for the purposes of applying the reference marks (4) to the film (6), there are provided a sharply defined light source or a passive light guide system with corresponding defining aperture means (5) or means of mechanical or chemical kind, and that means are additionally provided in per se known manner, for recording on the separating bar portion (3) or the edge bar portion (3'), simultaneously with the photographing operation or half-image photographing operation, the date, time, name, image number, film number, camera number, locations and coded identifying information for film processing or reproduction or any combinations of the individual data.

4. A stereo system according to one of the preceding claims, characterised in that for the purposes of automatic convergence compensation, the reference marking means is arranged displaceably on the separating bar portion (3) or edge bar portion (3').

5. A stereo system according to claims 1 to 3 (Figure 1), characterised in that disposed behind the diapositive to be projected are at least two photosensitive measuring cells (5) with a gap which extends parallel to the separating bar portion, in such a way that by way of a bridge control circuit and an adjusting motor they control the diapositive in parallel relationship to the plane of the film so that the diapositive is centered and any level defect is automatically compensated.

6. A stereo system according to claim 5, characterised in that there are provided two additional measuring cells which are produced by symmetrically dividing the two said cells (5) by a second gap normal to the separating bar portion (3), and a bridge control circuit which is enlarged according to the second axis, together with an additional adjusting motor, for convergence adjustment.

## Revendications

1. Système stéréoscopique comportant deux images de format large adjacentes et tournées en sens inverse, ainsi qu'une bande adjacente aux images précitées, caractérisé en ce que des repères (4), prévus sur la bande de séparation (3) ou la bande marginale (3'), sont analysés par un dispositif opto-électronique lors de la reproduction et permettent de compenser les défauts gênants de hauteur et de convergence, par l'intermédiaire d'un circuit de réglage en pont et de servo-moteurs.

2. Système stéréoscopique suivant la revendication 1, caractérisé en ce que les repères (4) se situent au milieu ou sont symétriques par rapport au milieu de la bande de séparation (3), prévue entre les deux images (1, 2), ou d'une bande marginale (3'), qui leur est parallèle.

3. Système stéréoscopique selon une des revendications 1 et 2, caractérisé en ce que pour l'application des repères (4) sur le film (6) sont prévus une source lumineuse à limite franche, un guide de lumière passif avec un diaphragme correspondant (5) ou des dispositifs de type chimique ou mécanique, et en ce que des dispositifs supplémentaires sont prévus de façon connue en soi, grâce auxquels peuvent être enregistrés sur la bande de séparation (3) ou la bande marginale (3'), en même temps que la pose ou la prise de vue, la date, l'heure, les noms, les numéros de vue, de film, d'appareil photographique, le nom du lieu, et des données codées pour le traitement du film, ou sa reproduction, ou des combinaisons quelconques des caractéristiques individuelles.

4. Système stéréoscopique selon une quelconque des revendications précédentes, caractérisé en ce que le système de marquage des repères peut être déplacé sur la bande de séparation (3) ou la bande marginale (3'), afin d'obtenir un réglage automatique de convergence.

5. Système stéréoscopique selon une quelconque des revendications 1 à 3 (figure 1), caractérisé en ce que deux cellules de mesure photosensibles au moins (5), séparées par une fente parallèle à la bande de séparation (3), sont disposées derrière la diapositive à projeter de manière à manœuvrer cette dernière parallèlement au plau du film, par l'intermédiaire d'un circuit de réglage en pont et d'un servo-moteur, la diapositive étant ainsi centrée et les éventuels défauts de hauteur automatiquement compensés.

6. Système stéréoscopique selon la revendication 5, caractérisé en ce que pour le réglage de convergence sont prévus deux cellules de mesure supplémentaires, obtenues en divisant symétriquement les deux cellules précitées (5) par une deuxième fente perpendiculaire à la bande (3), et un circuit de réglage en pont élargi au second axe, accompagné d'un servo-moteur supplémentaire.

# Fig.1

# Fig. 2

# Fig. 3